# EUROPEAN PATENT APPLICATION

(11) **EP 4 819 164 A1**
(43) Date of publication of application: **07.10.2026**
(21) Application number: 24895957.9
(22) Date of filing: 25.09.2024
(51) Int. Cl.: G21D 3/00

(54) **DATA CORRECTION METHOD AND APPARATUS FOR NUCLEAR REACTOR, COMPUTER DEVICE AND STORAGE MEDIUM**

(30) Priority: 29.11.2023 CN 202311614992
(71) Applicant: China Nuclear Power Technology Research Institute Co., Ltd., Shenzhen, Guangdong 518031 (CN); CGN Power Co., Ltd., Shenzen, Guangdong 518028 (CN); China Nuclear Power Engineering Co., Ltd., Shenzhen, Guangdong 518124 (CN)
(72) Inventor: WANG, Weiru, Shenzhen, Guangdong 518031 (CN); HU, Yisong, Shenzhen, Guangdong 518031 (CN); MAO, Yulong, Shenzhen, Guangdong 518031 (CN); LU, Xianghui, Shenzhen, Guangdong 518031 (CN); HU, Yousen, Shenzhen, Guangdong 518031 (CN); CAO, Jianhua, Shenzhen, Guangdong 518031 (CN); FENG, Yingjie, Shenzhen, Guangdong 518031 (CN); LI, Kejia, Shenzhen, Guangdong 518031 (CN); CHEN, Tianming, Shenzhen, Guangdong 518031 (CN); MENG, Shuqi, Shenzhen, Guangdong 518031 (CN); ZHANG, Wei, Shenzhen, Guangdong 518031 (CN)
(74) Representative: Greaves Brewster LLP
(86) International application number: PCT/CN2024/121156
(87) International publication number: WO 2025/112861

(57) **Abstract**

The present application relates to a data correction method and apparatus for a nuclear reactor, a computer device and a storage medium. The method comprises: obtaining calibrated core data of a reactor of a nuclear power plant at a calibration moment, the calibration moment being a moment when a detector in the reactor is calibrated, obtaining real-time core data by monitoring the reactor through the detector, performing thermal-hydraulic calculation for the reactor based on the real-time core data to obtain an estimated departure from nucleate boiling ratio of the reactor, and correcting the estimated departure from nucleate boiling ratio based on a core data deviation between the real-time core data and the calibrated core data to obtain a corrected departure from nucleate boiling ratio. The method can improve the accuracy of reactor protection and control.

## Description

### CROSS-REFERENCE TO RELATED APPLICATIONS

The present application claims priority to Chinese patent application No. 202311614992.2, filed on November 29, 2023, and entitled "DATA CORRECTION METHOD AND APPARATUS FOR NUCLEAR REACTOR, COMPUTER DEVICE, AND STORAGE MEDIUM", the entire content of which is incorporated herein by reference.

### TECHNICAL FIELD

The present application relates to the field of data processing technologies, and in particular, to a data correction method and apparatus for a nuclear reactor, a computer device, and a storage medium.

### BACKGROUND

In the field of nuclear power, to ensure the safety of a reactor in a nuclear power plant, it is necessary to monitor the reactor in real time and determine whether to perform protection control for the reactor based on monitoring data. For example, when it is monitored that the reactor experiences departure from nucleate boiling, a reactor trip protection operation is executed.

In conventional technologies, a departure from nucleate boiling ratio of the reactor is typically determined based on core data monitored in real time by a self-powered neutron detector (SPND) in the reactor and real-time monitored thermal-hydraulic parameters, so as to determine whether to perform protection control for the reactor based on the departure from nucleate boiling ratio.

However, since the SPND is typically calibrated by a periodic calibration method, and the core state of the reactor is constantly changing, a deviation exists between the real-time core state and the core state at the calibration moment. As a result, the departure from nucleate boiling ratio calculated using conventional methods is not accurate enough, leading to low precision of the reactor protection control.

### SUMMARY

Based on this, it is necessary to provide a data correction method and apparatus for a nuclear reactor, a computer device, a computer-readable storage medium, and a computer program product that can improve the precision of reactor protection control, in view of the above technical problems.

In a first aspect, a data correction method for a nuclear reactor is provided in the present application. The method includes: obtaining calibrated core data of a reactor of a nuclear power plant at a calibration moment, the calibration moment being a moment when a detector in the reactor is calibrated, obtaining real-time core data by monitoring the reactor through the detector, performing thermal-hydraulic calculation for the reactor based on the real-time core data to obtain an estimated departure from nucleate boiling ratio of the reactor, and correcting the estimated departure from nucleate boiling ratio based on a core data deviation between the real-time core data and the calibrated core data to obtain a corrected departure from nucleate boiling ratio, the corrected departure from nucleate boiling ratio being configured to perform protection control for the reactor.

In a second aspect, a data correction apparatus for a nuclear reactor is further provided in the present application. The apparatus includes: a calibration data acquisition module configured to obtain calibrated core data of a reactor of a nuclear power plant at a calibration moment, the calibration moment being a moment when a detector in the reactor is calibrated, a real-time data acquisition module, configured to obtain real-time core data by monitoring the reactor through the detector, a thermal-hydraulic calculation module configured to perform thermal-hydraulic calculation for the reactor based on the real-time core data to obtain an estimated departure from nucleate boiling ratio of the reactor, and a correction module configured to correct the estimated departure from nucleate boiling ratio based on a core data deviation between the real-time core data and the calibrated core data to obtain a corrected departure from nucleate boiling ratio, the corrected departure from nucleate boiling ratio being configured to perform protection control for the reactor.

In some embodiments, the correction module is further configured to: determine a target deviation function representing a relationship between a departure from nucleate boiling ratio deviation and the core data deviation, the departure from nucleate boiling ratio deviation being a deviation between the estimated departure from nucleate boiling ratio and an actual departure from nucleate boiling ratio, substitute the core data deviation into the target deviation function to obtain the departure from nucleate boiling ratio deviation, and determine the corrected departure from nucleate boiling ratio based on the estimated departure from nucleate boiling ratio and the departure from nucleate boiling ratio deviation.

In some embodiments, the data correction apparatus for a nuclear reactor further includes a function determination module configured to: obtain, through a design program, actual departure from nucleate boiling ratios and core data of the reactor under a plurality of core operating states, the core operating states including a normal operating condition state and an accident operating condition state, for each of the plurality of the core operating states, perform thermal-hydraulic calculation based on core data corresponding to the core operating state to determine an estimated departure from nucleate boiling ratio corresponding to the core operating state, determine, based on the estimated departure from nucleate boiling ratio and the actual departure from nucleate boiling ratio corresponding to the core operating state, a departure from nucleate boiling ratio deviation corresponding to the core operating state, determine a core data deviation between each of the plurality of the core operating states and a core operating state at the calibration moment, and perform function fitting based on the departure from nucleate boiling ratio deviation and the core data deviation corresponding to each of the plurality of the core operating states to obtain the target deviation function.

In some embodiments, the real-time core data includes real-time hot channel data. The real-time data acquisition module is further configured to: determine calibration parameters corresponding to the detector at the calibration moment, obtain a current signal of the detector, perform power reconstruction based on the calibration parameters and the current signal to obtain a core power distribution of the reactor, and perform hot channel data reconstruction based on the core power distribution to obtain the real-time hot channel data. The correction module is further configured to: determine the core data deviation based on a deviation between the real-time hot channel data and calibrated hot channel data, and correct the estimated departure from nucleate boiling ratio based on the core data deviation to obtain the corrected departure from nucleate boiling ratio.

In some embodiments, the real-time core data further includes real-time state parameters. The thermal-hydraulic calculation module is further configured to: perform thermal-hydraulic calculation for the reactor based on the core power distribution and the real-time state parameters to obtain the estimated departure from nucleate boiling ratio of the reactor.

In some embodiments, the real-time state parameters include a coolant inlet temperature, a coolant flow rate, and a pressurizer pressure. The boiling estimation module is further configured to: determine a critical heat flux of the reactor based on the coolant inlet temperature, the coolant flow rate, and the pressurizer pressure, determine a local heat flux of the core based on a ratio between the core power distribution and a heating perimeter, and determine the estimated departure from nucleate boiling ratio based on a ratio between the critical heat flux and the local heat flux of the core.

In some embodiments, after obtaining the corrected departure from nucleate boiling ratio, the data correction apparatus for a nuclear reactor further includes a control protection module configured to: compare the corrected departure from nucleate boiling ratio with a predetermined threshold corresponding to the reactor, and perform a reactor trip protection on the reactor when the corrected departure from nucleate boiling ratio is less than the predetermined threshold.

In a third aspect, a computer device is further provided in the present application. The computer device includes a memory and a processor, the memory stores a computer program. The processor, when executing the computer program, performs steps of the data correction method for the nuclear reactor described above.

In a fourth aspect, a computer-readable storage medium is further provided in the present application. The computer-readable storage medium has a computer program stored thereon. The computer program, when executed by a processor, performs steps of the data correction method for the nuclear reactor described above.

In a fifth aspect, a computer program product is further provided in the present application. The computer program product includes a computer program. The computer program, when executed by a processor, performs steps of the data correction method for the nuclear reactor described above.

According to the above data correction method and apparatus for a nuclear reactor, computer device, storage medium, and computer program product, the calibrated core data of the reactor of the nuclear power plant at the calibration moment and the real-time core data by monitoring the reactor through the detector is obtained. Then, thermal-hydraulic calculation is performed for the reactor based on the real-time core data to obtain the estimated departure from nucleate boiling ratio of the reactor. The estimated departure from nucleate boiling ratio is corrected in real time based on the core data deviation between the real-time core data and the calibrated core data, reducing unnecessary and overly conservative assumptions, and making the calculation of the departure from nucleate boiling ratio more accurate. Since the corrected departure from nucleate boiling ratio is configured to perform protection control for the reactor, the precision of the reactor protection control is improved.

### BRIEF DESCRIPTION OF THE DRAWINGS

FIG. 1 is a schematic diagram of an application environment of a data correction method for a nuclear reactor according to an embodiment.
FIG. 2 is a flow diagram of a data correction method for a nuclear reactor according to an embodiment.
FIG. 3 is a flow diagram of fitting a target deviation function according to an embodiment.
FIG. 4 is a block diagram of a structure of a data correction apparatus for a nuclear reactor according to an embodiment.
FIG. 5 is a schematic diagram of an internal configuration of a computer device according to an embodiment.
FIG. 6 is a schematic diagram of an internal configuration of a computer device according to another embodiment.

### DETAILED DESCRIPTION OF THE EMBODIMENTS

To make the objectives, technical solutions, and advantages of the present application clearer, the present application is further described in detail below with reference to the accompanying drawings and embodiments. It should be understood that the specific embodiments described herein are only used to explain the present application and are not used to limit the present application.

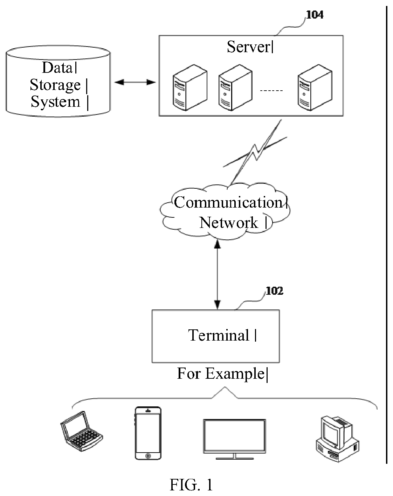

The data correction method for a nuclear reactor provided in the embodiments of the present application can be applied to the application environment shown in FIG. 1. The application environment includes a terminal 102 and a server 104, where the terminal 102 communicates with the server 104 via a network. A data storage system can store data to be processed by the server 104. The data storage system can be integrated on the server 104 or placed on a cloud or other network servers.

Specifically, taking the method being applied to the server 104 as an example, the server 104 obtains calibrated core data of a reactor of a nuclear power plant at a calibration moment, the calibration moment being a moment when a detector in the reactor is calibrated. The server 104 obtains real-time core data by monitoring the reactor through the detector. The server 104 performs thermal-hydraulic calculation for the reactor based on the real-time core data to obtain an estimated departure from nucleate boiling ratio of the reactor. The server 104 corrects the estimated departure from nucleate boiling ratio based on a core data deviation between the real-time core data and the calibrated core data to obtain a corrected departure from nucleate boiling ratio, where the corrected departure from nucleate boiling ratio is configured to perform protection control for the reactor. For example, the server 104 generates a reactor trip protection instruction for the reactor and sends the reactor trip protection instruction to the terminal 102. The terminal 102 executes reactor trip protection on the reactor based on the reactor trip protection instruction.

The terminal 102 can be, but is not limited to, various personal computers, laptops, smartphones, tablets, and internet of things (IoT) devices. The server 104 can be implemented as an independent server or a server cluster including multiple servers.

Those skilled in the art can understand that the application environment shown in FIG. 1 is only some scenarios related to the solution of the present application and does not constitute a limitation on the application environment of the solution of the present application.

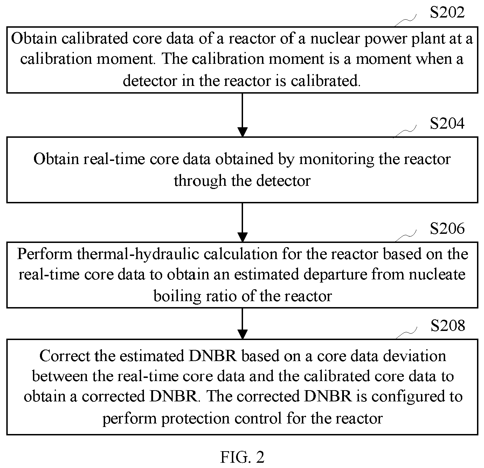

In some embodiments, as shown in FIG. 2, a data correction method for a nuclear reactor is provided. The method can be executed by a terminal or a server, or can be executed jointly by a terminal and a server. The method is described by taking the method being applied to the server 104 in FIG. 1 as an example, and includes the following steps S202 to S208.

In step S202, calibrated core data of a reactor of a nuclear power plant at a calibration moment is obtained. The calibration moment is a moment when a detector in the reactor is calibrated.

The reactor, also referred to as a nuclear reactor or atomic energy reactor, is a device configured to maintain a controlled, self-sustaining nuclear fission chain reaction to utilize nuclear energy. For example, in a nuclear power plant, the reactor is used for power generation. In a nuclear power plant, to ensure the safety of the reactor core active region, for example, to prevent safety accidents caused by fuel pellet melting and cladding failure due to departure from nucleate boiling (DNB), the reactor is usually monitored in real time by a detector in the reactor. The detector can be a self-powered neutron detector (SPND). Since the signal transmitted by the detector is a current signal, the detector needs to be calibrated periodically by on-site personnel. For example, the detector can be calibrated on the 1st of each month. Calibration refers to a process of correcting and adjusting the data monitored by the detector. The calibration moment is a moment when the detector in the reactor undergoes calibration.

Specifically, there can be multiple calibration moments. The server stores core data of the reactor at each calibration moment. The server can determine core data corresponding to a most recent calibration moment as the calibrated core data.

In step S204, real-time core data by monitoring the reactor through the detector is obtained.

The core data refer to data related to the core active region of the reactor, including hot channel data and state parameters. The fuel assembly of the reactor includes a plurality of fuel rods. The hot channel refers to a channel where a fuel rod with a highest power is located. The hot channel data refer to data related to the hot channel, including at least one of a hot channel enthalpy rise factor, a hot channel position, or a hot channel axial power offset. The state parameters may also be referred to as thermal-hydraulic parameters, including at least one of a coolant inlet temperature, a coolant flow rate, or a pressurizer pressure. The real-time core data refer to core data obtained in real time by monitoring the reactor through the detector.

Specifically, the detector monitors the reactor in real time and sends a monitoring signal to the server. The server can receive the monitoring signal sent by the detector and determine the real-time core data based on the monitoring signal.

In some embodiments, the real-time core data includes real-time state parameters and real-time hot channel data. The real-time state parameters can be directly obtained, while the real-time hot channel data need to be reconstructed based on the current signal of the detector. The server can perform power reconstruction on the current signal to obtain a core power distribution of the reactor. Then, the server performs hot channel data reconstruction based on the core power distribution to obtain the real-time hot channel data. The core power distribution refers to a distribution of linear power density corresponding to each fuel rod in the reactor.

In step S206, thermal-hydraulic calculation is performed for the reactor based on the real-time core data to obtain an estimated departure from nucleate boiling ratio of the reactor.

The departure from nucleate boiling ratio (DNBR) represents a boiling state or boiling degree of the reactor. The DNBR is negatively correlated with the boiling degree of the reactor. The smaller the DNBR, the higher the boiling degree of the reactor, and the higher the core power of the reactor. In practice, the DNBR refers to a ratio between a critical heat flux and a local heat flux.

Specifically, the server calculates a critical heat flux based on heat transfer principles and the real-time state parameters. Then, the server can obtain a linear power density corresponding to each node in the reactor based on the core power distribution. For each node, the server calculates a ratio between the linear power density and a heating perimeter corresponding to the node to obtain a local heat flux of the core. The server can determine a ratio between the critical heat flux and the local heat flux of the core as the estimated DNBR.

In step S208, the estimated DNBR is corrected based on a core data deviation between the real-time core data and the calibrated core data to obtain a corrected DNBR. The corrected DNBR is configured to perform protection control for the reactor.

The core data deviation refers to a deviation between the real-time core data and the calibrated core data, which may specifically include a hot channel data deviation and a state parameter deviation.

Specifically, the server calculates the core data deviation between the real-time core data and the calibrated core data, and determines a target deviation function representing a relationship between a DNBR deviation and the core data deviation. Then, the server substitutes the core data deviation into the target deviation function for calculation to obtain the DNBR deviation. The server corrects the estimated DNBR based on the DNBR deviation to obtain the corrected DNBR. The target deviation function can be determined based on actual DNBRs and core data of the reactor under various core operating states, and the core data at the calibration moment. The DNBR deviation is a deviation between the estimated DNBR and an actual DNBR. The actual DNBR is a theoretically true DNBR corresponding to the reactor.

In the above data correction method for a nuclear reactor, the calibrated core data of the reactor of the nuclear power plant at the calibration moment and the real-time core data by monitoring the reactor through the detector is obtained. Then, thermal-hydraulic calculation is performed for the reactor based on the real-time core data to obtain the estimated DNBR of the reactor. The estimated DNBR is corrected in real time based on the core data deviation between the real-time core data and the calibrated core data. The above data correction method for a nuclear reactor reduces unnecessary and overly conservative assumptions, making the calculation of the DNBR more accurate. Since the corrected DNBR is configured to perform protection control for the reactor, the precision of the reactor protection control is improved.

In some embodiments, in step S408, correcting the estimated DNBR based on the core data deviation between the real-time core data and the calibrated core data to obtain the corrected DNBR, includes: determining a target deviation function representing a relationship between a DNBR deviation and the core data deviation, the DNBR deviation being a deviation between the estimated DNBR and an actual DNBR; substituting the core data deviation into the target deviation function to obtain the DNBR deviation; and determining the corrected DNBR based on the estimated DNBR and the DNBR deviation.

Specifically, the server obtains a target deviation function fitted from core data under a large number of different core operating states, where a dependent variable in the target deviation function is the DNBR deviation, and an independent variable is the core data deviation. The server can substitute the core data deviation into the target deviation function for calculation to obtain the DNBR deviation, and then determine the corrected DNBR based on the estimated DNBR and the DNBR deviation.

In some embodiments, the server can sum the estimated DNBR and the DNBR deviation to obtain the corrected DNBR. The corrected DNBR can be represented by the following formula: ${DNBR}_{corr} = {DNBR}_{cal} + f \left(Δ{T}_{in},Δ{P}_{pzr},ΔQ,Δ{F}_{Δ H},Δ{d}_{F Δ H},ΔAO\right) ,$ where *DNBR_{corr}* refers to the corrected DNBR, and *DNBR_{cal}* refers to the estimated DNBR. *f* (Δ*T*_{*in*,}Δ*P_{pzr}*,Δ*Q*,Δ*F_{ΔH},*Δ*d_{FΔH}*,Δ*AO*) refers to the DNBR deviation, and Δ*Tᵢₙ*,Δ*P_{pzr}*, Δ*Q,ΔF_{ΔH}*, Δ*d_{FΔH}*,Δ*AO* all belong to the core data deviation. Δ*Tᵢₙ* refers to a deviation between a calibration coolant inlet temperature and a real-time coolant inlet temperature. Δ*P_{pzr}* refers to a deviation between a calibration pressurizer pressure and a real-time pressurizer pressure. Δ*Q* refers to a deviation between a calibration coolant flow rate and a real-time coolant flow rate. Δ*F*_{Δ*H*} refers to a deviation between a calibrated hot channel enthalpy rise factor and a real-time channel enthalpy rise factor. Δ*d*_{*F*Δ*H*} refers to a deviation between a calibrated hot channel position and a real-time hot channel position. Δ*AO* refers to a deviation between a calibrated hot channel axial power offset and a real-time hot channel axial power offset.

In this embodiment, since the target deviation function can represent the relationship between the DNBR and the core data deviation, the core data deviation can be directly substituted into the target deviation function to obtain the DNBR deviation, and the real-time data correction is performed based on the DNBR deviation, making the corrected DNBR more accurate.

In some embodiments, determining the target deviation function representing the relationship between the DNBR deviation and the core data deviation includes: obtaining actual DNBRs and core data of the reactor under a plurality of core operating states; for each of the plurality of the core operating states, performing thermal-hydraulic calculation based on core data corresponding to the core operating state to determine an estimated DNBR corresponding to the core operating state; determining, based on the estimated DNBR and the actual DNBR corresponding to the core operating state, a DNBR deviation corresponding to the core operating state; determining a core data deviation between each of the plurality of the core operating states and a core operating state at the calibration moment; and performing function fitting based on the DNBR deviation and the core data deviation corresponding to each of the plurality of the core operating states to obtain the target deviation function.

The design program is configured for simulating reactor conditions. The plurality of core operating states are predetermined through the design program, and may include, for example, a normal operating condition state and an accident operating condition state. The normal operating condition state refers to a core state under a normal operating condition, and the accident operating condition state refers to a core state under an accident condition. The actual DNBR refers to an actual DNBR of the reactor under the core operating state, which can be obtained by simulation through the design program.

Specifically, the server can obtain, from locally stored data of a plurality of core operating states, the actual DNBRs and core data of the reactor under each core operating state, and obtain the core data at the calibration moment. The data of each core operating state is generated by performing reactor condition simulation using the design program. For each core operating state, the server can perform thermal-hydraulic calculation based on thermal-hydraulic parameters in the core data corresponding to the core operating state to obtain an estimated DNBR corresponding to the core operating state, and determine a deviation between the estimated DNBR and the actual DNBR corresponding to the core operating state as the DNBR deviation corresponding to the core operating state. The server can also determine the calibration moment corresponding to the core operating state, and then determine a deviation between the core data corresponding to the core operating state and the calibrated core data at the calibration moment as the core data deviation between the core operating state and the core operating state at the calibration moment.

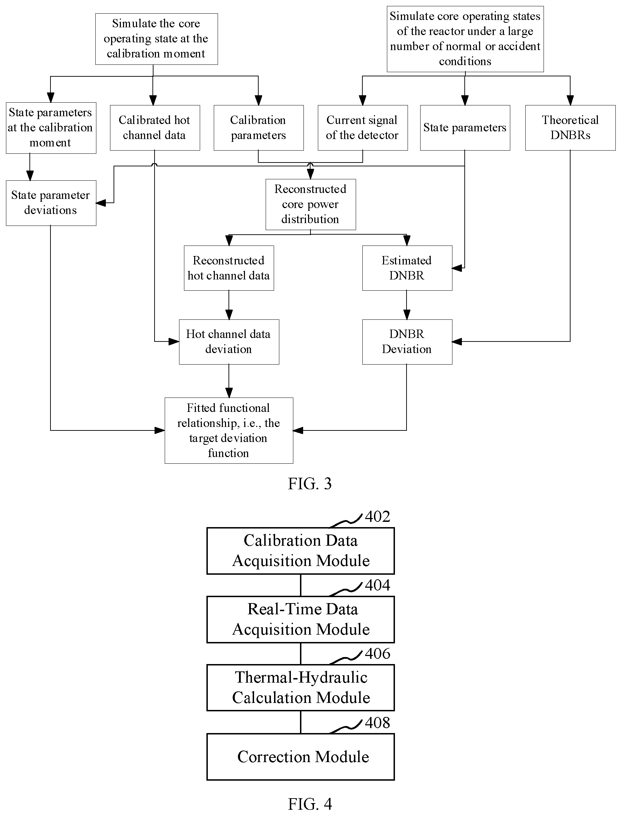

In some embodiments, as shown in FIG. 3, a flow diagram of fitting the target deviation function is shown. A terminal can use a nuclear design program to simulate core operating states of the reactor under normal operating conditions or accident conditions, to obtain core data and theoretical DNBRs under each simulated core operating state. The terminal can also use the nuclear design program to simulate the core operating state at the calibration moment, to obtain simulated calibration parameters and calibrated core data. Thus, the terminal can obtain state parameter deviations, hot channel deviations, and DNBR deviations based on the core data and theoretical DNBRs under each simulated core operating state, the simulated calibration parameters, and the calibrated core data, and perform fitting of the target deviation function based on the state parameter deviations, the hot channel deviations, and the DNBR deviations.

In this embodiment, function fitting is performed based on the DNBR deviation and the core data deviation corresponding to each core operating state to obtain the target deviation function for calculating the DNBR deviation in real time. Moreover, in the actual correction process, when adjusting uncertainty, only the coefficients of the correction term in the function need to be adjusted, without affecting other fixed data, thereby improving the safety of the protection control system.

In some embodiments, the real-time core data includes real-time hot channel data. In step S204, obtaining the real-time core data by monitoring the reactor through the detector, includes: determining calibration parameters corresponding to the detector at the calibration moment; obtaining a current signal of the detector; performing power reconstruction based on the calibration parameters and the current signal to obtain a core power distribution of the reactor; and performing hot channel data reconstruction based on the core power distribution to obtain the real-time hot channel data. Correcting the estimated DNBR based on the core data deviation between the real-time core data and the calibrated core data to obtain the corrected DNBR includes: determining the core data deviation based on a deviation between the real-time hot channel data and calibrated hot channel data; and correcting the estimated DNBR based on the core data deviation to obtain the corrected DNBR.

The calibration parameters are determined based on the monitoring signal of the detector at the calibration moment. The deviation between the real-time hot channel data and the calibrated hot channel data is the hot channel data deviation, and the hot channel data deviation is positively correlated with the DNBR deviation.

Specifically, the real-time hot channel data includes a real-time hot channel position, a real-time hot channel enthalpy rise factor, and a real-time hot channel axial power offset. The server can determine, based on the core power distribution, a channel where a fuel rod with a largest linear power density is located as the real-time hot channel, and determine the position of the real-time hot channel in the reactor to obtain the real-time hot channel position. The server can also perform integrated power calculation based on the linear power density corresponding to the hot channel to obtain the real-time hot channel enthalpy rise factor. The server can also calculate an upper half integrated power minus a lower half integrated power divided by a total integrated power based on the linear power density of the hot channel to obtain the real-time hot channel axial power offset.

In some embodiments, the calibration parameters include a calibrated current signal and a hot channel linear power density. Technical personnel on site at the nuclear power plant periodically calibrate the detector, for example, once a month, to obtain the calibrated current signal of the detector at the calibration moment. The terminal can use nuclear design software to simulate the core state of the reactor, to obtain hot channel linear power densities of all fuel assemblies in the core. The terminal uses the hot channel linear power density and the calibrated current signal as the calibration parameters, and sends the calibration moment and the corresponding calibration parameters to the server.

In some embodiments, the server can perform power reconstruction based on the calibration parameters and the current signal using a principle that the current is proportional to the power, to obtain the core power distribution of the reactor. For example, the calibration parameters include a hot channel linear power Pcalib(i,j) and a calibrated current signal Icalib(i,j), the real-time current signal of the detector is Imes(i,j), and the core power distribution can be expressed as Pmes(i,j). The formula for power reconstruction is as follows: $Pmes \left(i, j\right) = Pcalib \left(i, j\right) \times Imes \left(i, j\right) / Icalib \left(i, j\right) ,$ where (i,j) refers to a position of a node in the reactor.

In this embodiment, since the hot channel changes based on the core state of the reactor, and the hot channel data cannot be obtained directly, the core power distribution is obtained by performing power reconstruction based on the calibration parameters and the current signal, and the real-time hot channel data is reconstructed based on the core power distribution. Thus, the core data deviation is determined based on the deviation between the real-time hot channel data and the calibrated hot channel data, achieving real-time data correction.

In some embodiments, the real-time core data further includes real-time state parameters. In step S206, performing thermal-hydraulic calculation for the reactor based on the real-time core data to obtain the estimated DNBR of the reactor, includes: performing thermal-hydraulic calculation for the reactor based on the core power distribution and the real-time state parameters to obtain the estimated DNBR of the reactor.

Specifically, it can be understood that the real-time core data includes the real-time state parameters and the real-time hot channel data. The real-time state parameters can be configured for performing thermal-hydraulic calculation to obtain the estimated DNBR, and can also be involved in correcting the DNBR, i.e., the core data deviation includes the state parameter deviation.

In this embodiment, by performing thermal-hydraulic calculation for the reactor based on the core power distribution and the real-time state parameters, the real-time calculation of the DNBR is achieved.

In some embodiments, the real-time core data includes a coolant inlet temperature, a coolant flow rate, and a pressurizer pressure. Performing the thermal-hydraulic calculation for the reactor based on the core power distribution and the real-time state parameters to obtain the estimated DNBR of the reactor includes: determining a critical heat flux of the reactor based on the coolant inlet temperature, the coolant flow rate, and the pressurizer pressure; determining a local heat flux of the core based on a ratio between the core power distribution and a heating perimeter; and determining the estimated DNBR based on a ratio between the critical heat flux and the local heat flux of the core.

Specifically, the server calculates an enthalpy value, a flow velocity, and a void fraction of a local fluid in the reactor based on the core inlet temperature, the core inlet flow rate, the pressurizer pressure, and heat transfer principles. Then, the server substitutes the enthalpy value, flow velocity, and void fraction of the local fluid into a predetermined fitting relationship to calculate the critical heat flux. The predetermined fitting relationship is obtained by fitting the experimentally obtained enthalpy value, flow velocity, void fraction of the local fluid with the critical heat flux. The server obtains a heating perimeter corresponding to each node in the reactor. For each node, the server determines a linear power density corresponding to the node, and determines a ratio between the linear power density and the heating perimeter as the local heat flux of the core corresponding to the node. The server can determine a ratio between the critical heat flux and the local heat flux of the core as the estimated DNBR.

In this embodiment, by determining the critical heat flux and the local heat flux of the core, and determining the estimated DNBR based on the ratio between the local heat flux and the critical heat flux of the core, the real-time estimation of the boiling state is achieved.

In some embodiments, after obtaining the corrected DNBR, the data correction method for a nuclear reactor further includes: comparing the corrected DNBR with a predetermined threshold corresponding to the reactor; and performing a reactor trip protection on the reactor when the corrected DNBR is less than the predetermined threshold.

The predetermined threshold is a pre-set value, specifically any value between 1 and 10. Reactor trip protection refers to an operation of controlling the reactor to stop the reaction to prevent safety accidents caused by reactor boiling.

Specifically, the server can compare the corrected DNBR with the predetermined threshold. On a condition that the corrected DNBR is greater than or equal to the predetermined threshold, it is determined that the reactor has not experienced nucleate boiling and no protection control is needed. On a condition that the corrected DNBR is less than the predetermined threshold, it can be determined that the reactor is currently experiencing nucleate boiling, indicating that the core power of the reactor is too high, and reactor trip protection is required. The server can generate a reactor trip protection instruction for the reactor and send the reactor trip protection instruction to the terminal. The terminal receives the reactor trip protection instruction sent by the server, and controls the reactor to execute reactor trip protection based on the reactor trip protection instruction.

In this embodiment, since the corrected DNBR is more accurate than the data before correction, by comparing the corrected DNBR with the predetermined threshold and performing reactor trip protection when the corrected DNBR is less than the predetermined threshold, more precise reactor protection control is achieved, improving the operational safety of the nuclear power plant.

It should be understood that although the steps in the flow diagrams of the above embodiments are shown in sequence as indicated by arrows, these steps are not necessarily executed in the order indicated by the arrows. Unless explicitly stated herein, the execution of these steps is not strictly limited to a particular order, and they can be executed in other orders. Moreover, at least a portion of the steps in the flow diagrams of the above embodiments may include a plurality of sub-steps or a plurality of stages. These sub-steps or stages are not necessarily completed at the same time but can be executed at different times. The execution order of these sub-steps or stages is not necessarily sequential, but can be performed alternately or in rotation with at least a portion of other steps or sub-steps or stages of other steps.

Based on the same inventive concept, an embodiment of the present application further provides a data correction apparatus for a nuclear reactor for performing the above-described data correction method for a nuclear reactor. The implementation solution provided by the apparatus for solving the problem is similar to the implementation solution described in the above method. Therefore, for specific limitations in one or more embodiments of the data correction apparatus for a nuclear reactor provided below, reference may be made to the limitations of the data correction method for a nuclear reactor described above, and details are not repeated herein.

In some embodiments, as shown in FIG. 4, a data correction apparatus for a nuclear reactor is provided, including: a calibration data acquisition module 402, a real-time data acquisition module 404, a boiling estimation module 406, and a correction module 408.

The calibration data acquisition module 402 is configured to obtain calibrated core data of a reactor of a nuclear power plant at a calibration moment, the calibration moment being a moment when a detector in the reactor is calibrated.

The real-time data acquisition module 404 is configured to obtain real-time core data by monitoring the reactor through the detector.

The boiling estimation module 406 is configured to perform thermal-hydraulic calculation for the reactor based on the real-time core data to obtain an estimated departure from nucleate boiling ratio (DNBR) of the reactor.

The correction module 408 is configured to correct the estimated DNBR based on a core data deviation between the real-time core data and the calibrated core data to obtain a corrected DNBR, the corrected DNBR being configured to perform protection control for the reactor.

In some embodiments, the correction module 408 is further configured to: determine a target deviation function representing a relationship between a DNBR deviation and the core data deviation, the DNBR deviation being a deviation between the estimated DNBR and an actual DNBR; substitute the core data deviation into the target deviation function to obtain the DNBR deviation; and determine the corrected DNBR based on the estimated DNBR and the DNBR deviation.

In some embodiments, the data correction apparatus for a nuclear reactor further includes a function determination module configured to: obtain, through a design program, actual DNBRs and core data of the reactor under a plurality of core operating states; for each of the plurality of the core operating states, perform thermal-hydraulic calculation based on core data corresponding to the core operating state to determine an estimated DNBR corresponding to the core operating state; determine, based on the estimated DNBR and the actual DNBR corresponding to the core operating state, a DNBR deviation corresponding to the core operating state; determine a core data deviation between each of the plurality of the core operating states and a core operating state at the calibration moment; and perform function fitting based on the DNBR deviation and the core data deviation corresponding to each of the plurality of the core operating states to obtain the target deviation function.

In some embodiments, the real-time core data includes real-time hot channel data. The real-time data acquisition module 404 is further configured to: determine calibration parameters corresponding to the detector at the calibration moment; obtain a current signal of the detector; perform power reconstruction based on the calibration parameters and the current signal to obtain a core power distribution of the reactor; and perform hot channel data reconstruction based on the core power distribution to obtain the real-time hot channel data. The correction module 408 is further configured to: determine the core data deviation based on a deviation between the real-time hot channel data and calibrated hot channel data; and correct the estimated DNBR based on the core data deviation to obtain the corrected DNBR.

In some embodiments, the real-time core data further includes real-time state parameters. The boiling estimation module 406 is further configured to: perform the thermal-hydraulic calculation for the reactor based on the core power distribution and the real-time state parameters to obtain the estimated DNBR of the reactor.

In some embodiments, the real-time core data includes a coolant inlet temperature, a coolant flow rate, and a pressurizer pressure. The boiling estimation module 406 is further configured to: determine a critical heat flux of the reactor based on the coolant inlet temperature, the coolant flow rate, and the pressurizer pressure; determine a local heat flux of the core based on a ratio between the core power distribution and a heating perimeter; and determine the estimated DNBR based on a ratio between the critical heat flux and the local heat flux of the core.

In some embodiments, after obtaining the corrected DNBR, the data correction apparatus for a nuclear reactor further includes a control protection module configured to: compare the corrected DNBR with a predetermined threshold corresponding to the reactor; and perform a reactor trip protection on the reactor when the corrected DNBR is less than the predetermined threshold.

Each module in the above data correction apparatus for a nuclear reactor can be implemented in whole or in part by software, hardware, or a combination thereof. The above modules can be embedded in or independent of a processor in a computer device in the form of hardware, or can be stored in a memory in the computer device in the form of software, so that the processor can call and execute the operations corresponding to the above modules.

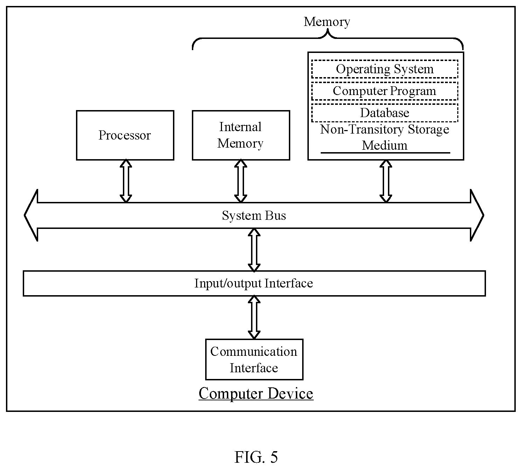

In some embodiments, a computer device is provided, which can be a server, and its internal structure diagram can be shown in FIG. 5. The computer device includes a processor, a memory, an input/output interface (I/O interface), and a communication interface. The processor, the memory, and the input/output interface are connected via a system bus, and the communication interface is connected to the system bus via the input/output interface. The processor of the computer device is configured to provide computing and control capabilities. The memory of the computer device includes a non-transitory storage medium and an internal memory. The non-transitory storage medium stores an operating system, a computer program, and a database. The internal memory provides an environment for the operation of the operating system and the computer program in the non-transitory storage medium. The database of the computer device is configured to store data related to the data correction method for a nuclear reactor. The input/output interface of the computer device is configured to exchange information between the processor and external devices. The communication interface of the computer device is configured to communicate with an external terminal via a network. The computer program, when executed by the processor, implements the data correction method for a nuclear reactor.

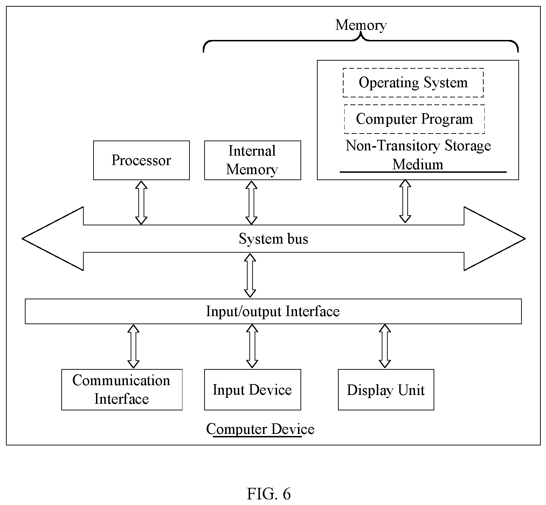

In some embodiments, a computer device is provided, which can be a terminal, and its internal structure diagram can be shown in FIG. 6. The computer device includes a processor, a memory, an input/output interface, a communication interface, a display unit, and an input device. The processor, the memory, and the input/output interface are connected via a system bus, and the communication interface, the display unit, and the input device are connected to the system bus via the input/output interface. The processor of the computer device is configured to provide computing and control capabilities. The memory of the computer device includes a non-transitory storage medium and an internal memory. The non-transitory storage medium stores an operating system and a computer program. The internal memory provides an environment for the operation of the operating system and the computer program in the non-transitory storage medium. The input/output interface of the computer device is configured to exchange information between the processor and external devices. The communication interface of the computer device is configured to communicate with an external terminal via a wired or wireless manner, where the wireless manner can be implemented by WIFI, a mobile cellular network, NFC (Near Field Communication), or other technologies. The computer program, when executed by the processor, implements the data correction method for a nuclear reactor. The display unit of the computer device is configured to form a visually visible picture, which can be a display screen, a projection device, or a virtual reality imaging device. The display screen can be a liquid crystal display screen or an electronic ink display screen. The input device of the computer device can be a touch layer covered on the display screen, or a button, trackball, or touchpad provided on the computer device housing, or an external keyboard, touchpad, or mouse.

Those skilled in the art can understand that the structures shown in FIG. 5 and FIG. 6 are only block diagrams of partial structures related to the solution of the present application, and do not constitute a limitation on the computer device to which the solution of the present application is applied. Specifically, the computer device may include more or fewer components than shown in the figures, or combine some components, or have a different arrangement of components.

In some embodiments, a computer device is provided, including a memory and a processor, where the memory stores a computer program. The processor, when executing the computer program, performs steps of the data correction method for a nuclear reactor described above.

In some embodiments, a computer-readable storage medium is provided, having a computer program stored thereon. The computer program, when executed by a processor, performs steps of the data correction method for a nuclear reactor described above.

In some embodiments, a computer program product is provided, including a computer program. The computer program, when executed by a processor, performs steps of the data correction method for a nuclear reactor described above.

It should be noted that the user information (including but not limited to user device information, user personal information, etc.) and data (including but not limited to data for analysis, stored data, displayed data, etc.) involved in this application are all information and data that have been authorized by the user or fully authorized by all parties, and the collection, use, and processing of related data need to comply with relevant laws, regulations, and standards of relevant countries and regions.

A person of ordinary skill in the art can understand that all or part of the processes in the methods of the above embodiments can be implemented by instructing relevant hardware through a computer program. The computer program can be stored on a non-transitory computer-readable storage medium. When executed, the computer program can include the processes of the above method embodiments. Any reference to a memory, a database, or another medium used in the various embodiments provided in this application may include at least one of a non-transitory memory and a transitory memory. The non-transitory memory may include a read-only memory (ROM), a magnetic tape, a floppy disk, a flash memory, an optical memory, a high-density embedded non-transitory memory, a resistive random access memory (ReRAM), a magnetoresistive random access memory (MRAM), a ferroelectric random access memory (FRAM), a phase change memory (PCM), a graphene memory, etc. The transitory memory may include a random access memory (RAM) or an external cache memory. By way of illustration and not limitation, RAM can be in various forms, such as a static random access memory (SRAM) or a dynamic random access memory (DRAM). The database involved in the various embodiments provided in this application may include at least one of a relational database and a non-relational database. The non-relational database may include a blockchain-based distributed database, but is not limited thereto. The processor involved in the various embodiments provided in this application may be a general-purpose processor, a central processing unit, a graphics processing unit, a digital signal processor, a programmable logic device, a quantum computing-based data processing logic device, etc., but is not limited thereto.

The technical features of the above embodiments can be combined arbitrarily. To simplify the description, not all possible combinations of the technical features in the above embodiments are described. However, as long as there is no contradiction in the combination of these technical features, it should be considered as falling within the scope of this specification.

The above embodiments only express several implementation modes of the present application, and their descriptions are relatively specific and detailed, but they should not be understood as limiting the patent scope of the present application. It should be pointed out that a person of ordinary skill in the art may make several modifications and improvements without departing from the concept of the present application, and these all fall within the protection scope of the present application. Therefore, the protection scope of the present application should be subject to the appended claims.

## Claims

1. A data correction method for a nuclear reactor, comprising:
obtaining calibrated core data of a reactor of a nuclear power plant at a calibration moment, the calibration moment being a moment when a detector in the reactor is calibrated;
obtaining real-time core data by monitoring the reactor through the detector;
performing thermal-hydraulic calculation for the reactor based on the real-time core data to obtain an estimated departure from nucleate boiling ratio of the reactor; and
correcting the estimated departure from nucleate boiling ratio based on a core data deviation between the real-time core data and the calibrated core data to obtain a corrected departure from nucleate boiling ratio, the corrected departure from nucleate boiling ratio being configured to perform protection control for the reactor.

2. The method according to claim 1, wherein correcting the estimated departure from nucleate boiling ratio based on the core data deviation between the real-time core data and the calibrated core data to obtain the corrected departure from nucleate boiling ratio comprises:
determining a target deviation function representing a relationship between a departure from nucleate boiling ratio deviation and the core data deviation, the departure from nucleate boiling ratio deviation being a deviation between the estimated departure from nucleate boiling ratio and an actual departure from nucleate boiling ratio;
substituting the core data deviation into the target deviation function to obtain the departure from nucleate boiling ratio deviation; and
determining the corrected departure from nucleate boiling ratio based on the estimated departure from nucleate boiling ratio and the departure from nucleate boiling ratio deviation.

3. The method according to claim 2, wherein determining the target deviation function representing the relationship between the departure from nucleate boiling ratio deviation and the core data deviation comprises:
obtaining, through a design program, actual departure from nucleate boiling ratios and core data of the reactor under a plurality of core operating states, the core operating states comprising a normal operating condition state and an accident operating condition state;
performing, for each of the plurality of the core operating states, thermal-hydraulic calculation based on core data corresponding to the core operating state to determine an estimated departure from nucleate boiling ratio corresponding to the core operating state;
determining, based on the estimated departure from nucleate boiling ratio and the actual departure from nucleate boiling ratio corresponding to the core operating state, a departure from nucleate boiling ratio deviation corresponding to the core operating state;
determining a core data deviation between each of the plurality of the core operating states and a core operating state at the calibration moment; and
performing function fitting based on the departure from nucleate boiling ratio deviation and the core data deviation corresponding to each of the plurality of the core operating states to obtain the target deviation function.

4. The method according to claim 1, wherein the real-time core data comprises real-time hot channel data, and obtaining the real-time core data by monitoring the reactor through the detector comprises:
determining calibration parameters corresponding to the detector at the calibration moment;
obtaining a current signal of the detector;
performing power reconstruction based on the calibration parameters and the current signal to obtain a core power distribution of the reactor; and
performing hot channel data reconstruction based on the core power distribution to obtain the real-time hot channel data; and
correcting the estimated departure from nucleate boiling ratio based on the core data deviation between the real-time core data and the calibrated core data to obtain the corrected departure from nucleate boiling ratio comprises:
determining the core data deviation based on a deviation between the real-time hot channel data and calibrated hot channel data; and
correcting the estimated departure from nucleate boiling ratio based on the core data deviation to obtain the corrected departure from nucleate boiling ratio.

5. The method according to claim 4, wherein the real-time core data further comprises real-time state parameters, and performing the thermal-hydraulic calculation for the reactor based on the real-time core data to obtain the estimated departure from nucleate boiling ratio of the reactor comprises:
performing the thermal-hydraulic calculation for the reactor based on the core power distribution and the real-time state parameters to obtain the estimated departure from nucleate boiling ratio of the reactor.

6. The method according to claim 5, wherein the real-time state parameters comprise a coolant inlet temperature, a coolant flow rate, and a pressurizer pressure, and performing the thermal-hydraulic calculation for the reactor based on the core power distribution and the real-time state parameters to obtain the estimated departure from nucleate boiling ratio of the reactor comprises:
determining a critical heat flux of the reactor based on the coolant inlet temperature, the coolant flow rate, and the pressurizer pressure;
determining a local heat flux of the core based on a ratio between the core power distribution and a heating perimeter; and
determining the estimated departure from nucleate boiling ratio based on a ratio between the critical heat flux and the local heat flux of the core.

7. The method according to claim 1, wherein after obtaining the corrected departure from nucleate boiling ratio, the method further comprises:
comparing the corrected departure from nucleate boiling ratio with a predetermined threshold corresponding to the reactor; and
performing a reactor trip protection on the reactor when the corrected departure from nucleate boiling ratio is less than the predetermined threshold.

8. A data correction apparatus for a nuclear reactor, comprising:
a calibration data acquisition module configured to obtain calibrated core data of a reactor of a nuclear power plant at a calibration moment, the calibration moment being a moment when a detector in the reactor is calibrated;
a real-time data acquisition module configured to obtain real-time core data by monitoring the reactor through the detector;
a thermal-hydraulic calculation module configured to perform thermal-hydraulic calculation for the reactor based on the real-time core data to obtain an estimated departure from nucleate boiling ratio of the reactor; and
a correction module configured to correct the estimated departure from nucleate boiling ratio based on a core data deviation between the real-time core data and the calibrated core data to obtain a corrected departure from nucleate boiling ratio, the corrected departure from nucleate boiling ratio being configured to perform protection control for the reactor.

9. A computer device, comprising a memory and a processor, the memory storing a computer program, wherein the processor, when executing the computer program, performs steps of the method according to any one of claims 1 to 7.

10. A computer-readable storage medium, having a computer program stored thereon, wherein the computer program, when executed by a processor, performs steps of the method according to any one of claims 1 to 7.
